# EUROPÄISCHE PATENTSCHRIFT

(11) **EP 2 998 034 B1**
(45) Veröffentlichungstag und Bekanntmachung des Hinweises auf die Patenterteilung: **01.07.2020**
(21) Anmeldenummer: 15000271.5
(22) Anmeldetag: 29.01.2015
(51) Int. Cl.: B07B 1/46, B24C 1/04, B24C 5/02, B26F 3/00

(54) **Siebbelag und Verfahren zur Herstellung eines Siebbelages**
Screen lining and method for producing a screen lining
Panneau de criblage et procédé de fabrication d'un panneau de criblage

(30) Priorität: 19.09.2014 DE 102014013650
(43) Veröffentlichungstag der Anmeldung: 23.03.2016
(73) Patentinhaber: Siebtechnik GMBH, 45478 Mülheim an der Ruhr (DE)
(72) Erfinder: Dietschreit, Horst, 45479 Mülheim an der Ruhr (DE)
(74) Vertreter: Patentanwaltskanzlei Methling

(56) Entgegenhaltungen:
- EP-A1- 0 613 509
- WO-A1-94/02293
- WO-A1-99/13152
- DE-A1-102011 056 931
- DE-U1- 29 517 982
- DE-U1-202011 108 856
- US-B2- 6 617 023

## Beschreibung

Die Erfindung betrifft ein Verfahren zur Herstellung eines Siebbelages, wobei in einen Rohling Durchtrittsöffnungen mittels Wasserstrahlschneiden eingebracht werden.

Ferner betrifft die Erfindung einen solchen Siebbelag mit Durchtrittsöffnungen, die mittels Wasserstrahlschneiden in einen Rohling eingebracht wurden.

Es sind verschiedene Verfahren zur Herstellung eines Siebbelages bekannt, bei denen in einem Rohling des Siebbelages Durchtrittsöffnungen mittels Wasserstrahlschneiden eingebracht werden. Ein derartiges Verfahren zeigt die DE 692 08 100 T2.

Aus Dokument DE 295 17 982 U1 ist ein Sieb mit einem Durchbrüche aufweisenden einstückigen Siebkörper bekannt, der zumindest einseitig mit einer Schutzschicht aus weicherem Material versehen ist, wobei die Schutzschicht Leibungen der Durchbrüche teilweise bedeckt.

Aus Dokument DE 10 2011 056 931 A1 ein Düsenmagazin zur Aufnahme von mindestens zwei verschiedenen Arten von Schneiddüsen, bevorzugt drei Schneiddüsen, zum Strahlschneiden von einem zu schneidendem Material bekannt.

Um ein Verstopfen der Durchtrittsöffnungen zu vermeiden ist es vorteilhaft, wenn sich die Durchtrittsöffnungen in Durchströmrichtung erweitern.

Nachteilig bei dem bekannten Verfahren zur Herstellung eines Siebbelages mit Durchtrittsöffnungen ist es, das aufgrund des Fertigungsverfahrens der Öffnungswinkel der Durchtrittsöffnungen in Durchströmrichtung auf ein sehr geringes Maß beschränkt ist.

Die Aufgabe der Erfindung ist es, ein Verfahren zur Herstellung eines Siebbelages anzugeben, mittels dessen es möglich ist, beliebige Öffnungswinkel der Siebdurchtrittsöffnungen in Durchströmrichtung zu realisieren und einen entsprechenden Siebbelag zu fertigen. Eine weitere Aufgabe der Erfindung ist es, einen Siebbelag anzugeben, bei dem der Öffnungswinkel der Durchtrittsöffnungen in Durchströmrichtung beliebig wählbar ist, um die gewünschten Siebeigenschaften zu erhalten.

Diese Aufgabe wird erfindungsgemäß durch ein Verfahren gemäß Anspruch 1 gelöst. Vorteilhafte Weiterbildungen der Erfindungen sind in den Unteransprüchen angegeben.

Besonders vorteilhaft bei dem Verfahren zur Herstellung eines Siebbelages, wobei in einen Rohling Durchtrittsöffnungen mittels Wasserstrahlschneiden eingebracht werden, ist es, dass das Wasserstrahlschneiden in mehreren Schritten erfolgt, wobei in einem ersten Schritt ein Vorschneiden der Durchtrittsöffnungen des Siebbelages erfolgt und in zumindest einem zweiten Schritt ein Fertigschneiden der Durchtrittsöffnungen des Siebbelages erfolgt.

Die Durchtrittsöffnungen können kreisförmig oder oval oder dergestalt ausgeführt sein, dass deren Länge größer ist als deren Breite. Ferner können verschieden geformte Durchtrittsöffnungen in einem Siebbelag kombiniert werden, da die Ansteuerung der Schneidanlage bei dem mehrstufigen Wasserstrahlschneiden beliebig erfolgen kann.

Erfindungsgemäß ist somit vorgesehen, die Durchtrittsöffnungen in dem Siebbelag durch ein mehrstufiges Wasserstrahlschneiden herzustellen, insbesondere durch ein zweistufiges Wasserstrahlschneiden, wobei in einem ersten Fertigungsschritt mittels Wasserstrahlschneiden die Durchtrittsöffnungen vorgeschnitten werden und wobei in einem zweiten Fertigungsschritt ebenfalls mittels Wasserstrahlschneiden das Fertigschneiden der Durchtrittsöffnungen des Siebbelages durchgeführt wird.

Bei dem ersten Schritt des Vorschneidens erfolgt somit ein Modellieren der Öffnungsweite und des Öffnungswinkels der sich in Durchströmrichtung erweiternden Durchtrittsöffnungen, wobei in dem zweiten Schritt des Fertigschneidens die Definition der Lochweite bzw. Schlitzbreite der Durchtrittsöffnungen erfolgt, je nachdem welche Grundform für die Durchtrittsöffnungen gewählt wird. Es können auch verschiedene Grundformen von Durchtrittsöffnungen, wie die Kreisform, ovale Form oder Schlitzform, insbesondere gerade verlaufende und/oder kurvenförmig verlaufende Schlitze miteinander kombiniert werden. Die Durchtrittsöffnungen können auf dem Siebbelag auf zueinander parallel verlaufenden Linien insbesondere auf gleicher Höhe und/oder versetzt zueinander angeordnet sein. Die Anordnung der Durchtrittsöffnungen auf dem Siebbelag kann regelmäßig oder unregelmäßig sein.

Es können jedoch auch weitere Fertigungsschritte, insbesondere mehrere weitere Fertigungsschritte mittels Wasserstrahlschneiden vorgesehen sein, so dass das Herstellen der Durchtrittsöffnungen in mehr als zwei Fertigungsschritten erfolgt. Besonders vorteilhaft ist es jedoch, wenn dieses in zwei Fertigungsschritten mittels Wasserstrahlschneiden erfolgt.

Dabei wird beim Wasserstrahlschneiden mit unter hohem Druck stehenden Wasser und insbesondere einem Abrasivzusatz wie beispielsweise Korund, Material abgetragen um hierdurch die Durchtrittsöffnungen des Siebbelages herzustellen. Die Durchtrittsöffnungen sind dabei als kreisförmige und/oder ovale und/oder schlitzförmige Sieböffnungen ausgebildet. Vorzugsweise weist der Siebbelag eine Mehrzahl kreisförmiger und/oder ovaler und/oder schlitzförmiger Durchtrittsöffnungen auf.

Der Rohling, aus dem der Siebbelag durch ein mehrstufiges Wasserstrahlschneiden hergestellt wird, kann dabei durch ein Metallblech, insbesondere ein Stahl- oder Edelstahlblech oder durch Kunststoff oder Keramik gebildet sein. Ein solches, den Rohling bildendes Plattenmaterial kann eine Dicke von einigen Millimetern, wie beispielsweise 2 mm, 3 mm, 4 mm, 5 mm oder mehr aufweisen. Durch die Materialwahl und die gewählte Dicke des Materials können die gewünschten Festigkeitswerte des Siebbelages erreicht werden, die für den Einsatz des Siebbelages in einer Siebmaschine oder Siebzentrifuge oder sonstige Entfeuchtungsvorrichtung erforderlich sind. Der Siebbelag kann dabei für einen Einsatz in einer Siebmaschine oder einer Siebschnecken-, Schub- oder Schwingsiebzentrifuge oder andere Entfeuchtungsaggregate vorgesehen sein.

Bei den mehreren, insbesondere beiden Fertigungsschritten mittels Wasserstrahlschneiden zum Vorschneiden und zum Fertigschneiden der Durchtrittsöffnungen kann derselbe Abrasivzusatz eingesetzt werden. Alternativ können bei den beiden Fertigungsschritten in Form des Wasserstrahlschneidens zum Vorschneiden und zum Fertigschneiden unterschiedliche Abrasivzusätze dem unter Druck stehenden Wasser zugegeben werden.

Dabei können das Vorschneiden und/oder das Fertigschneiden mittels Wasser-Abrasiv-Suspensionsstrahlschneiden oder mittels Wasser-Abrasiv-Injektorstrahlschneiden durchgeführt werden. Beim Wasser-Abrasiv-Injektorstrahlschneiden wird Abrasiv aus einem Vorratsbehälter angesaugt, wobei aufgrund der Verfahrensweise geringe Mengen von Luft mit angesaugt werden. Beim Wasser-Abrasiv-Suspensionsstrahlschneiden hingegen wird eine Suspension aus Wasser enthaltend ein Abrasiv aus einem Vorratsbehälter angesaugt, wobei keine Luftblasen in der Suspension enthalten sind. Hieraus resultiert ein feineres Schnittbild beim Wasser-Abrasiv-Suspensionsstrahlschneiden als beim Wasser-Abrasiv-Injektorstrahlschneiden. Beide Fertigungsschritte des Vorschneidens und des Fertigschneidens können mit dem selben Wasserstrahlschneidverfahren oder mit unterschiedlichen Wasserstrahlschneidverfahren in beliebiger Kombination ausgeführt werden.

Dabei erfolgen das Vorschneiden und/oder das Fertigschneiden der Durchtrittsöffnungen des Siebbelages vorzugsweise von der Seite des Siebbelages her, welche die Unterseite des Siebbelages bildet.

Die Druchströmrichtung der Durchtrittsöffnungen in dem Siebbelag verläuft dabei von der Oberseite des Siebbelages zu der Unterseite des Siebbelages.

Durch das Vorschneiden und/oder das Fertigschneiden der Durchtrittsöffnungen von der Siebunterseite her ist es möglich, mittels Wasserstrahlschneiden sehr feine Durchtrittsöffnungen, das heißt exakt definierte kreisförmige oder ovale Öffnungen oder schmale Schlitze in dem Siebbelag herzustellen, ohne dass es an den Kanten der Sieböffnungen zu Formabweichungen kommt.

Vorzugsweise erfolgt das Vorschneiden und das Fertigschneiden mittels zweier auf einem Düsenkopf insbesondere hintereinander angeordneter Düsen.

Durch eine derartige Anordnung zweier Düsen auf einem Düsenkopf kann das Vorschneiden und das Fertigschneiden unmittelbar nacheinander innerhalb eines Arbeitsganges erfolgen.

Es kann somit die Fertigung der Durchtrittsöffnungen in dem Siebbelag mittels einer Düse in zwei oder mehr Schritten erfolgen. Alternativ besteht die Möglichkeit, dass die Fertigung der Durchtrittsöffnungen in dem Siebbelag in einem Arbeitsgang mit mehreren hintereinander angeordneten Düsen erfolgt, wobei mittels einer ersten Düse das Vorschneiden in Form eines Modellierens des Öffnungswinkels der Durchtrittsöffnung mittels Wasserstrahlschneiden durchgeführt wird und mittels einer zweiten Düse das Fertigschneiden der eigentlichen Durchtrittsöffnungen mittels Wasserstrahlschneiden durchgeführt wird.

Dabei kann das Vorschneiden und das Fertigschneiden mittels zweier Düsen durchgeführt werden, die mit dem selben Wasserdruck beaufschlagt werden oder die mit unterschiedlichen Wasserdrücken beaufschlagt werden. Insbesondere kann das Fertigschneiden mit einem höheren Wasserdruck durchgeführt werden als das Vorschneiden. Alternativ kann das Vorschneiden mit einem höheren Wasserdruck durchgeführt werden, als das Fertigschneiden.

Vorzugsweise erfolgt das Vorschneiden mit einem Abrasivzusatz, insbesondere mit einer Suspension enthaltend einen Abrasivzusatz.

Vorzugsweise erfolgt das Fertigschneiden mit einem Abrasivzusatz, insbesondere mit einer Suspension enthaltend einen Abrasivzusatz erfolgt.

Besonders bevorzugt ist der Abstand zwischen Düse und Werkstück beim Vorschneiden größer als der Abstand zwischen Düse und Werkstück beim Fertigschneiden.

Es hat sich gezeigt, dass der sich ergebende Öffnungswinkel der Sieböffnungen in Durchströmrichtung insbesondere abhängig ist vom Abstand der Düse zum Werkstück beim Vorschneiden. Je größer der Abstand der Düse zum Werkstück beim Vorschneiden ist, umso größer ist der Öffnungswinkel der Siebdurchtrittsöffnung. Umgekehrt ist der Öffnungswinkel der Durchtrittsöffnungen in dem Siebbelag in Durchströmrichtung kleiner, je näher die Düse beim Vorschneiden an dem Werkstück ist. Durch die Einstellung des Abstandes zwischen Düse und Werkstück beim Vorschneiden ist somit ein beliebiger Öffnungswinkel der Durchtrittsöffnungen in dem Siebbelag in Durchströmrichtung einstellbar.

Weitere wichtige Einflussparameter für den sich aufgrund des Modellierens beim Vorschneiden ergebenden Öffnungswinkels der Durchtrittsöffnungen sind der Abrasivmassenstrom sowie der Wasserdruck und die Schnittgeschwindigkeit. Mit sinkendem Wasserdruck vergrößert sich der Öffnungswinkel der Durchtrittsöffnungen. Mit sinkender Schnittgeschwindigkeit, d.h. der Vorschubgeschwindigkeit beim Vorschneiden, steigt der Öffnungswinkel der Durchtrittsöffnungen ebenfalls an. Durch die entsprechende Wahl und Festlegung der Einflussparameter kann der gewünschte Öffnungswinkel der Durchtrittsöffnungen erzeugt werden.

Vorzugsweise werden der Abstand zwischen Düse und Werkstück und die weiteren Einflussparameter beim Vorschneiden so eingestellt, dass der halbe Öffnungswinkel der Durchtrittsöffnungen gegenüber der senkrechten 5° - 15°, insbesondere bis zu 20° beträgt.

Das Fertigschneiden erfolgt vorzugsweise mit einem geringeren Abstand der Düse zum Werkstück, als beim Modellieren des Öffnungswinkels beim Vorschneiden. Dabei ist die Breite der Durchtrittsöffnungen abhängig von der eingesetzten Düse, d.h. die Schnittbreite der Durchtrittsöffnungen ist abhängig vom Durchmesser der verwendeten Düse beim Fertigschneiden. Durch den Einsatz entsprechender Düsen beim Fertigschneiden können sehr feine und schmale Durchtrittsöffnungen hergestellt werden wie beispielsweise schmale schlitzförmige Sieböffnungen von beispielsweise 0,2 mm Breite der Durchtrittsöffnungen in dem Sieb.

Je breiter die Durchtrittsöffnungen an der Oberseite des Siebbelages sein sollen, umso größer ist der Durchmesser der Düse beim Fertigschneiden zu wählen.

Bei dem erfindungsgemäßen Verfahren zur Herstellung eines Siebbelages erfolgt somit beim Vorschneiden mittels Wasserstrahlschneiden lediglich ein Materialabtrag, wobei noch keine durch die Dicke des Material von der Oberseite bis zur Unterseite des Siebbelages durchgehenden Öffnungen geschnitten werden. Das Vorschneiden entspricht somit einem Modellieren des Öffnungswinkels der Durchtrittsöffnungen in dem Sieb.

Bei diesem Vorgang des Vorschneidens mittels Wasserstrahlschneiden bildet somit insbesondere der Abstand zwischen Düse und Werkstück einen entscheidenden Fertigungsparameter, da hierüber der Öffnungswinkel der Durchtrittsöffnungen in Durchströmrichtung variiert werden kann. Daneben sind ferner die weiteren Einflussparameter Abrasivmassenstrom sowie Wasserdruck und Schnittgeschwindigkeit beim Vorschneiden entsprechend festzulegen.

Beim Fertigschneiden mittels eines zweiten Fertigungsschnittes mittels Wasserstrahlschneiden erfolgt sodann das Herstellen der Öffnungen, in dem feine und klar definierte runde und/oder ovale und/oder längliche Durchtrittsöffnungen in den Siebbelag geschnitten werden.

Der erfindungsgemäße Siebbelag mit Durchtrittsöffnungen, die mittels Wasserstrahlschneiden in einen Rohling eingebracht wurden, ist dadurch gekennzeichnet, dass das Wasserstrahlschneiden in mehreren Schritten erfolgt, wobei in einem ersten Schritt ein Vorschneiden der Durchtrittsöffnungen des Siebbelages und in zumindest einem zweiten Schritt ein Fertigschneiden der Öffnungen des Siebbelages erfolgt. Vorzugsweise wird ein solcher Siebbelag nach dem zuvor erläuterten erfindungsgemäßen Verfahren hergestellt.

Dementsprechend erfolgt in einem ersten Schritt ein Modellieren des Öffnungswinkels der Durchtrittsöffnungen in Durchströmungsrichtung und in einem zweiten Schritt das Fertigschneiden mit der gewünschten Öffnungsgröße der Durchtrittsöffnungen in dem Siebbelag.

Dabei wird beim Wasserstrahlschneiden mit unter hohem Druck stehenden Wasser und insbesondere einem Abrasivzusatz wie beispielsweise Korund, Material abgetragen um hierdurch die Durchtrittsöffnungen des Siebbelages herzustellen. Die Durchtrittsöffnungen sind dabei als runde und/oder ovale und/oder schlitzförmige Sieböffnungen ausgebildet

Vorzugsweise sind diese runden und/oder ovalen und/oder schlitzförmigen Sieböffnungen auf zueinander parallel verlaufenden Linien in dem Siebbelag angeordnet. Dementsprechend weist der Siebbelag vorzugsweise eine Mehrzahl runder und/oder ovaler und/oder schlitzförmiger Durchtrittsöffnungen auf, die auf gleicher Höhe und/oder versetzt zueinander in dem Siebbelag angeordnet sind.

Der Rohling, aus dem der Siebbelag durch ein mehrstufiges Wasserstrahlschneidverfahren hergestellt wird, kann dabei durch ein Metallblech, insbesondere ein Stahl- oder Edelstahlblech, oder durch Kunststoff oder Keramik gebildet sein. Ein solches, den Rohling bildendes Plattenmaterial kann eine Dicke von einigen Millimetern, wie beispielsweise 2 mm, 3 mm, 4 mm, 5 mm oder mehr aufweisen. Durch die Materialwahl und die gewählte Dicke des Materials können die gewünschten Festigkeitswerte des Siebbelages erreicht werden, die für den Einsatz des Siebbelages in einer Siebmaschine erforderlich sind. Der Siebbelag kann dabei für einen Einsatz in einer Siebmaschine oder einer Siebschnecken-, Schub- oder Schwingsiebzentrifuge oder andere Entfeuchtungsaggregate vorgesehen sein.

Bei den beiden Fertigungsschritten mittels Wasserstrahlschneiden zum Vorschneiden und zum Fertigschneiden der Durchtrittsöffnungen kann derselbe Abrasivzusatz eingesetzt werden. Alternativ können bei den beiden Fertigungsschritten in Form des Wasserstrahlschneidens zum Vorschneiden und zum Fertigschneiden unterschiedliche Abrasivzusätze dem unter Druck stehenden Wasser zugegeben werden.

Dabei können das Vorschneiden und/oder das Fertigschneiden mittels Wasser-Abrasiv-Suspenslonsstrahlschneiden oder mittels Wasser-Abrasiv-Injektorstrahlschneiden durchgeführt werden. Beim Wasser-Abrasiv-Injektorstrahlschneiden wird Abrasiv aus einem Vorratsbehälter angesaugt, wobei aufgrund der Verfahrensweise geringe Mengen von Luft mit angesaugt werden. Beim Wasser-Abrasiv-Suspensionsstrahlschneiden hingegen wird eine Suspension aus Wasser enthaltend ein Abrasiv aus einem Vorratsbehälter angesaugt, wobei keine Luftblasen in der Suspension enthalten sind. Hieraus resultiert ein feineres Schnittbild beim Wasser-Abrasiv-Suspensionsstrahlschneiden als beim Wasser-Abrasiv-Injektorstrahlschneiden. Beide Fertigungsschritte des Vorschneidens und des Fertigschneidens können mit dem selben Wasserstrahlschneidverfahren oder mit unterschiedlichen Wasserstrahlschneidverfahren in beliebiger Kombination ausgeführt werden.

Dabei erfolgt das Vorschneiden und/oder das Fertigschneiden der Durchtrittsöffnungen des Siebbelages vorzugsweise von der Seite des Siebbelages her, welche die Unterseite des Siebbelages bildet.

Die Durchströmrichtung der Durchtrittsöffnungen in dem Siebbelag verläuft dabei von der Oberseite des Siebbelages zu der Unterseite des Siebbelages. Durch das Vorschneiden und/oder das Fertigschneiden der Durchtrittsöffnungen von der Siebunterseite her ist es möglich, mittels Wasserstrahlschneiden sehr feine Durchtrittsöffnungen, das heißt exakt definierte schmale Öffnungen, insbesondere Rundöffnungen und/oder Schlitze in dem Siebbelag herzustellen, ohne dass es an den Kanten der insbesondere schlitzförmigen Sieböffnungen zu Formabweichungen kommt.

Besonders bevorzugt erweitern sich die Durchtrittsöffnungen in dem Siebbelag von der Oberseite des Siebbelages her zur Unterseite des Siebbelages hin. Das bedeutet, dass sich die Durchtrittsöffnungen vorzugsweise in dem Siebbelag in Durchströmrichtung erweitern. Hierdurch wird Verstopfungen der Durchtrittsöffnungen durch eine Reduktion des Strömungswiderstands sowie durch das Verhindern von Verklemmungen von Feststoffpartikeln zuverlässig vorgebeugt. Besonders bevorzugt beträgt der halbe Öffnungswinkel der Durchtrittsöffnungen gegenüber der Senkrechten 5° bis 15°, insbesondere bis zu 20°.

Insbesondere kann der halbe Offnungswinkel der Durchtrittsöffnungen gegenüber der Senkrechten größer oder gleich 3°, insbesondere größer oder gleich 5°, insbesondere größer oder gleich 8°, insbesondere größer oder gleich 10°, insbesondere größer oder gleich 12°, insbesondere größer oder gleich 15° sein.

Ferner kann der halbe Öffnungswinkel der Durchtrittsöffnungen gegenüber der Senkrechten bis zu 20°, insbesondere bis zu 18°, insbesondere bis zu 15°, insbesondere bis zu 12°, insbesondere bis zu 10°, insbesondere bis zu 8° betragen.

Vorzugsweise ist der Siebbelag durch Keramik oder Stahl, insbesondere Edelstahl, oder Kunststoff gebildet.

Durch die entsprechende Materialwahl können die gewünschten Eigenschaften des Siebbelages herbeigeführt werden. Bei der Verwendung von Edelstahl ist besonders vorteilhaft, dass dieser rostfrei und gegenüber aggressiven Medien besonders beständig ist. Ein besonderer Vorteil von Keramik ist die Härte des Materials und somit Unempfindlichkeit gegen Abrasion, wodurch sich eine größere Standzeit des Siebbelages ergibt.

In einer bevorzugten Ausführungsform weist der Siebbelag an seiner Oberseite eine Beschichtung auf. Insbesondere kann es sich bei dieser Beschichtung um eine Keramikbeschichtung oder eine Hartmetallbeschichtung oder eine Polyurethanbeschichtung handeln. Diese Beschichtung wird vor dem Wasserstrahlschneiden auf den Rohling aufgebracht, sodass das Einbringen der Durchtrittsöffnungen in den entsprechend beschichteten Rohling erfolgt. Die Beschichtung wird somit beim Prozess des Fertigschneidens mitgeschnitten und weist dementsprechend exakte Kanten der Durchtrittsöffnungen ohne unerwünschte Formabweichungen oder Kantenrundungen auf.

Die Oberseite bezeichnet dabei jene Seite, die während des Einsatzes des Siebbelages in einer Siebmaschine mit dem aufzubereitenden, insbesondere zu trocknenden Gut beaufschlagt wird.

Mit dem Aufbringen einer solchen Beschichtung auf der Oberseite des Siebbelages kann hierdurch eine Schutzschicht des Siebbelages erzeugt werden, wodurch das Zeitstandverhalten des Siebbelages verbessert wird. Insbesondere besteht auch die Möglichkeit mehrere Beschichtungen in Form eines sandwichförmigen Aufbaus auf der Oberseite des Siebbelages aufzubringen, um die gewünschten Materialeigenschaften wie Abrasionswiderstand und Dämpfungseigenschaften zu kombinieren.

Bei einer besonders bevorzugten Ausführungsform weist somit der Siebbelag an seiner Oberseite eine Beschichtung als Verschleißschutz auf. Dabei können vorbeschichtete Rohlinge mittels des erfindungsgemäßen zweistufigen oder mehrstufigen Fertigungsverfahrens mittels Wasserstrahlschneiden bearbeitet werden, indem in einem ersten Fertigungsschritt mittels Wasserstrahlschneiden ein Vorschneiden erfolgt und in einem zweiten Fertigungsschritt mittels Wasserstrahlschneiden ein Fertigschneiden der Durchtrittsöffnungen des Siebbelages erfolgt. Sofern hier als Rohling ein vorbeschichteter Rohling wie beispielsweise ein beschichtetes Blech zum Einsatz kommt, wird hierdurch durch das beschriebene Fertigungsverfahren ein Siebbelag geschaffen, der einen Verschleißschutz aufweist.

In einer weiteren bevorzugten Ausführungsform ist die Oberfläche, insbesondere die Oberseite des Siebbelages gehärtet, insbesondere kann die Oberfläche, insbesondere die Oberseite des Siebbelages vor dem Wasserstrahlschneiden gehärtet werden. Hierdurch ist es möglich, mittels Wasserstrahlschneiden in dem zweistufigen oder mehrstufigen Verfahren die Durchtrittsöffnungen in einen oberflächengehärteten Siebbelagsrohling einzubringen, so dass der Siebbelag ein verbessertes Zeitstandverhalten aufweist.

Ein Ausführungsbeispiel der Erfindung ist in den Figuren dargestellt und wird nachfolgend näher erläutert. Es zeigen:
- Fig. 1: Die Draufsicht auf die Oberseite eines Siebbelages;
- Fig. 2: den Schnitt A - A nach Figur 1 eines Rohlings vor der Herstellung der Durchtrittsöffnungen in dem Siebbelag;
- Fig. 3: den Schnitt A - A nach Fig. 1 nach dem Vorschneiden der Durchtrittsöffnungen in dem Siebbelag;
- Fig. 4: den Schnitt A - A nach Fig. 1 nach dem Fertigschneiden der Durchtrittsöffnungen in dem Siebbelag;
- Fig. 5: ein Anlagenschema einer Wasserstrahlschneidanlage zur Herstellung des Siebbelages;
- Fig. 6: den Schnitt C - C nach Fig. 5;
- Fig. 7: eine perspektivische Ansicht Wasserstrahlschneidanlage in einer schematischen Darstellung.

Die Darstellungen in den Figuren sind lediglich schematisch und nicht maßstabsgetreu.

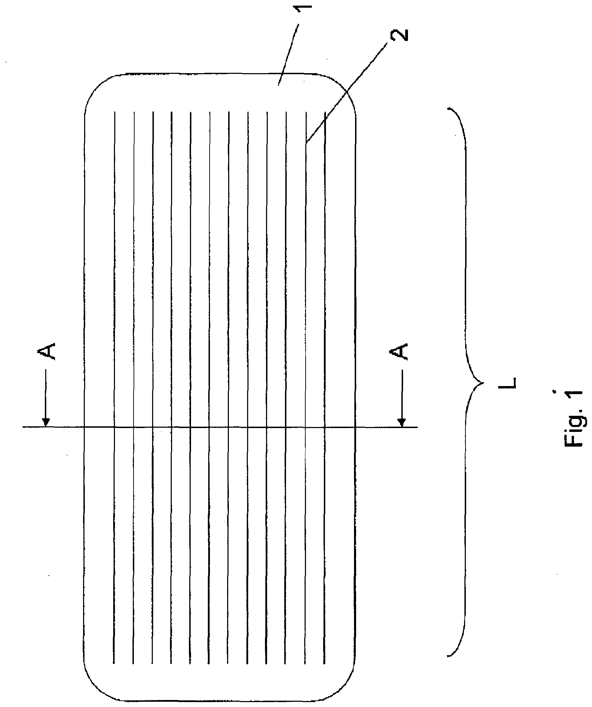

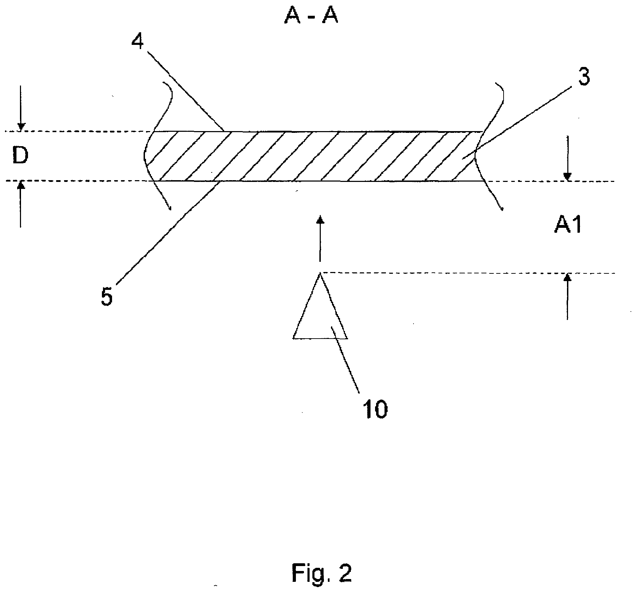

Fig. 1 zeigt die Draufsicht auf die Oberseite eines Siebbelages 1. Der Siebbelag 1 gemäß des dargestellten Ausführungsbeispiels weist eine Mehrzahl parallel verlaufender schlitzförmiger Durchtrittsöffnungen 2 der Länge L auf. Die Herstellung der schlitzförmigen Durchtrittsöffnungen 2 in dem Siebbelag 1 wird anhand der Figuren 2 - 4 erläutert, die den Schnitt A - A nach Fig. 1 zu verschiedenen Zeitpunkten des Herstellungsverfahrens zeigen. Die Herstellung des Siebbelages 1 mit den Durchtrittsöffnungen 2 erfolgt, indem mittels Wasserstrahlschneiden die Durchtrittsöffnungen 2 in zwei Schritten in den Siebbelag 1 eingebracht werden. Die Fertigung der Durchtrittsöffnungen 2 in zwei Schritten wird nachfolgend anhand der Figuren erläutert.

In Fig. 2 ist dargestellt der Rohling 3 des Siebbelages. Das Wasserstrahlschneiden erfolgt von der Unterseite 5 her. Mit dem Bezugszeichen 4 ist die Oberseite des Siebbelages 1 bezeichnet. Der Rohling 3 und damit letztendlich auch der Siebbelag 1 weist die Dicke D auf.

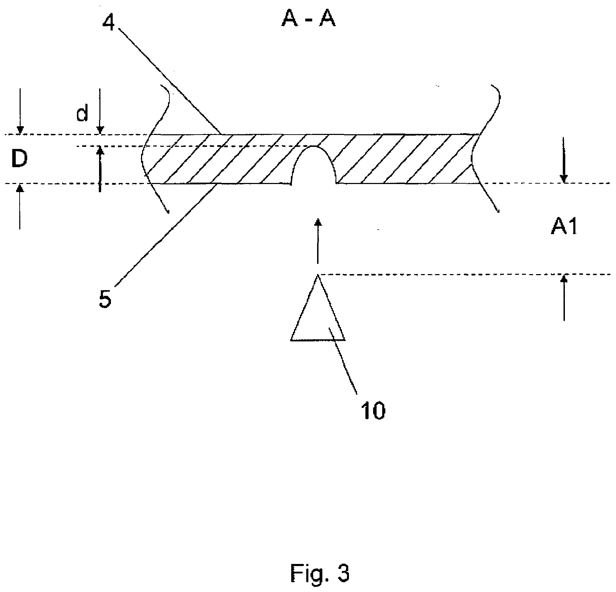

In einem ersten Verfahrensschritt erfolgt mittels Wasserstrahlschneiden mittels der ersten Düse 10 ein Vorschneiden entsprechend einem Modellieren der Durchtrittsöffnungen 2 in dem Siebbelag 1. Bei dem Vorschneiden wird, wie dies in Fig. 3 erkennbar ist, mittels der ersten Düse 10 unter Einhaltung des Abstandes A1 des Düsenkopfes der Düse 10 zur Unterseite 5 des Werkstückes die Durchtrittsöffnung von der Unterseite her vorgeschnitten. Das Resultat des ersten Schneidvorgangs ist in Fig. 3 erkennbar. Es ist erkennbar, dass bei diesem Vorgang des Modellierens ein Materialabtrag erfolgt, wobei kein vollständiges Schneiden der Dicke D erfolgt, sondern eine Restwanddicke d verbleibt.

Über den Abstand A1 des ersten Düsenkopfes 10 zur Unterseite 5 des Werkstücks und die Festlegung der weiteren Einflussparameter Abrasivmassenstrom, Wasserdruck und Vorschubgeschwindigkeit beim Vorschneiden kann der Öffnungswinkel der Durchtrittsöffnung eingestellt werden. Je größer der Abstand A1 zwischen der ersten Düse 10 und Werkstückunterseite 5 ist, umso größer ist letztendlich der Öffnungswinkel der hierdurch hergestellten Durchtrittsöffnung. Umgekehrt wird bei einer Verringerung des Abstandes A1 von der ersten Düse 10 zur Werkstückunterseite 5 der Öffnungswinkel verkleinert.

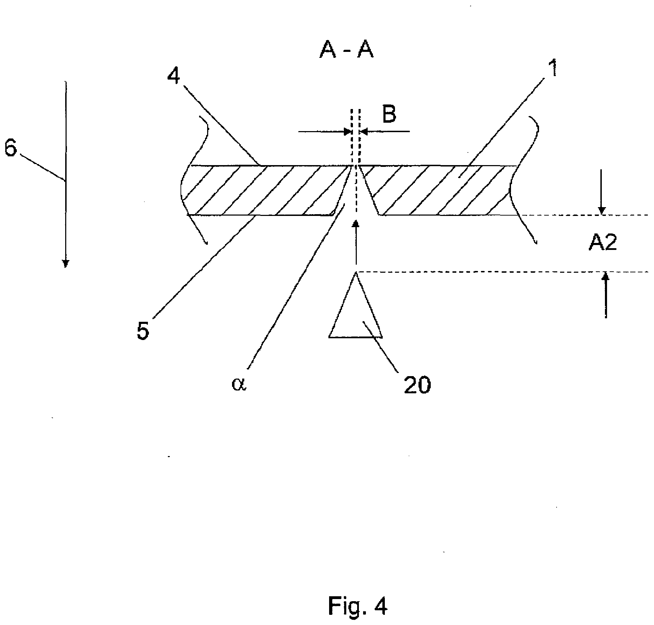

In Fig. 4 ist der zweite Schneidvorgang mittels der zweiten Düse 20 dargestellt, mittels derer das Fertigschneiden der Düsendurchtrittsöffnung 2 in dem Siebbelag 1 erfolgt. Nach dem Fertigschneiden weist die Durchtrittsöffnung 2 die Breite B auf, die deutlich kleiner ist als die Längserstreckung L, wie sie in Fig. 1 erkennbar ist. Über den Durchmesser der zweiten Wasserstrahlschneiddüse 20 wird die Breite B der Durchtrittsöffnung 2 eingestellt. Ferner ist der Abstand A2 von der zweiten Schneiddüse 20 zur Werkstückunterseite 5 kleiner, als der Abstand A1 der ersten Düse 10 20 zur Werkstückunterseite 5 beim Vorschneiden.

Ferner ist in Fig. 4 erkennbar der halbe Öffnungswinkel α der sich in Durchströmrichtung 6 erweiternden Durchtrittsöffnung 2 in dem Siebbelag 1. Eingetragen ist der halbe Öffnungswinkel α des Konturverlaufs des Siebbelages 1 gegenüber der Senkrechten, wie dies in Fig. 4 durch die gestrichelte Linie angedeutet ist.

Der Öffnungswinkel und damit ebenfalls der halbe Öffnungswinkel α des Konturverlaufs des Siebbelages 1 gegenüber der Senkrechten wird wie erläutert über den Abstand A1 der ersten Düse 10 zum Werkstück und die entsprechende Festlegung der weiteren Einflussparameter eingestellt.

Ferner ist in Fig. 4 erkennbar die Durchströmrichtung 6 bei Einsatz des Siebbelages 1 zur Entwässerung von aufzubereitenden Gut. Hierzu trifft das aufzubereitenden Gut auf die Oberseite 4 des Siebbelages 1 und durch die Durchtrittsöffnungen 2 wird die Flüssigkeit aus dem aufzubereitenden Gut abgeführt. Um Verstopfungen zu vermeiden weisen die Durchtrittsöffnungen in Durchströmrichtung 6 einen sich erweiternden Querschnitt auf, wie dies in Fig. 4 erkennbar ist. Hierdurch wird der Strömungswiderstand in den Durchtrittsöffnungen reduziert und Verklemmungen von Feststoffpartikeln vorgebeugt.

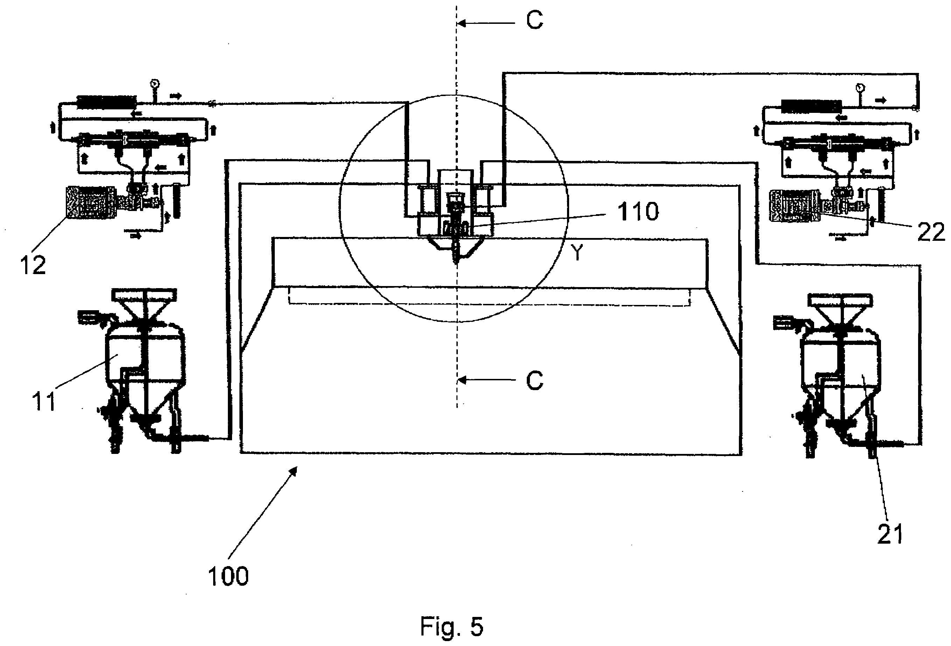

Fig. 5 zeigt ein Anlagenschema einer Wasserstrahlschneidanlage 100 mit dem Düsenkopf 110. An dem Düsenkopf 110 sind in der Bildebene nach Fig. 5 hintereinander angeordnet die beiden Düsen 10, 20, mittels derer in einem Arbeitsgang sowohl das Vorschneiden als auch das Fertigschneiden der Durchtrittsöffnungen 2 des Siebbelages 1, wie es in den Figuren 1 - 4 dargestellt ist, durchgeführt wird.

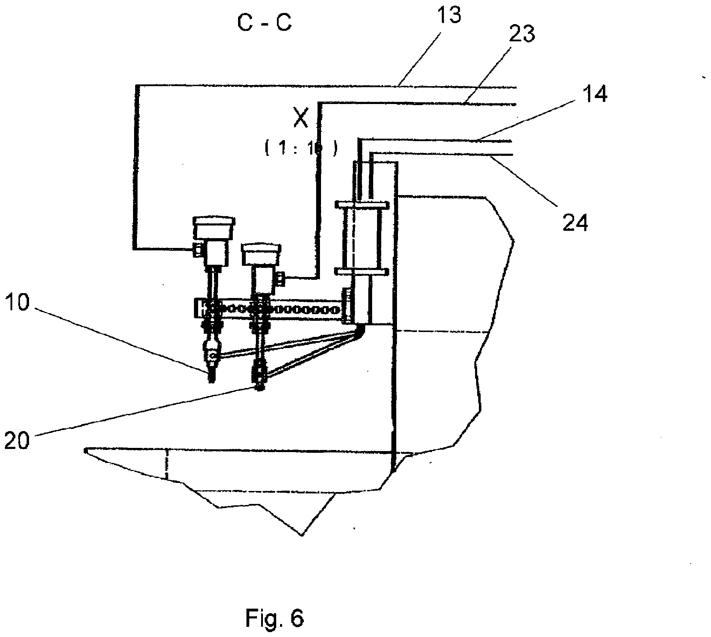

Den Schnitt C - C nach Fig. 5 zeigt Fig. 6 in einem vergrößerten Ausschnitt. Erkennbar in Fig. 6 sind die hintereinander angeordneten Düsen mit der ersten Düse 10, mittels derer das Vorschneiden der Durchtrittsöffnungen in dem Siebbelag durchgeführt wird, sowie der dahinter angeordneten zweiten Düse 20, mittels derer das Fertigschneiden der Durchtrittsöffnungen des Siebbelages durchgeführt wird.

In Fig. 5 ist ferner erkennbar die Abrasivzufuhranlage 11 zur Zufuhr eines Abrasivzusatzes zur ersten Düse 10. Des Weiteren ist erkennbar die Hydraulikpumpe 12, mittels derer die erste Düse 10 mit dem für das Vorschneiden erforderlichen Wasserdruck beaufschlagt wird. Auf der rechten Seite in Fig. 5 befinden sich analog die zweite Abrasivzufuhranlage 21 mittels derer Abrasivzusatz zur zweiten Düse 20 zugeführt wird und ferner die zweite Hydraulikpumpe 22, durch die der entsprechende Wasserdruck für die zweite Düse 20 bereit gestellt wird, der erforderlich ist, um das Fertigschneiden der Durchtrittsöffnungen 2 in dem Siebbelag 1 mittels der zweiten Düse 20 durchzuführen.

Durch das zweistufige Wasserstrahlschneiden können beliebige Spaltformen, Öffnungswinkel und Spaltweiten maßtreu realisiert werden, indem in einem ersten Durchgang mittels der ersten Düse 10 ein Modellieren durch das Vorschneiden erfolgt und in einem zweiten Durchgang mittels der zweiten Düse 20, bei der es sich um eine Mikrodüse handelt, ein Fertigschneiden der Durchtrittsöffnungen 2 in dem Siebbelag 1 erfolgt.

Wie in den Figuren 5 und 6 dargestellt, sind dabei in einem Düsenkopf 110 hintereinander die erste Düse 10 als Modellierdüse und die zweite Düse 20 als Schneiddüse angeordnet.

Sowohl die erste Düse 10 als auch die zweite Düse 20 saugen Abrasiv durch den Effekt der Wasserstrahldüse automatisch aus den Abrasivzufuhranlagen 11, 21 an. Mittels der ersten Abrasivzufuhranlage 11 wird reines Abrasiv für die erste Düse 10 bereitgestellt. Bei der zweiten Abrasivzufuhranlage 21 erfolgt eine Aufbereitung des Abrasivzusatzes insofern, als dass Abrasiv vorgemischt mit Wasser bereitgestellt wird, so dass keine Luft angesaugt wird. Hierdurch werden Toleranzen während des Schneidvorgangs mittels der zweiten Düse 20 verkleinert, da ein Ansaugen von Luft aus der zweiten Abrasivzufuhranlage 21 zuverlässig verhindert wird.

Dadurch, dass beiden Düsen 10, 20 in einem Düsenkopf 110 hintereinander angeordnet sind, erfolgt das Vorschneiden und das Fertigschneiden mit derselben Vorschubgeschwindigkeit.

In Fig. 6 sind ferner erkennbar die Anschlussleitungen 13, 23, 14, 24 über welche die Düsenköpfe 10, 20 versorgt werden. Über die Hochdruckleitung 13 ist der erste Düsenkopf 10 mit der ersten Hydraulikpumpe 12 verbunden und wird von dieser gespeist. Über die zweite Hochdruckleitung 23 ist die zweite Düse 20 mit der zweiten Hydraulikpumpe 22 gekoppelt und wird von dieser gespeist.

Des Weiteren ist erkennbar die erste Abrasivzufuhrleitung 14, über die erste Düse 10 von der ersten Abrasivzufuhranlage 11 gespeist wird. Des Weiteren ist in Fig. 6 eingezeichnet die zweite Abrasivzufuhrleitung 24, über die die zweite Düse 20 von der zweiten Abrasivzufuhranlage 21 gespeist wird.

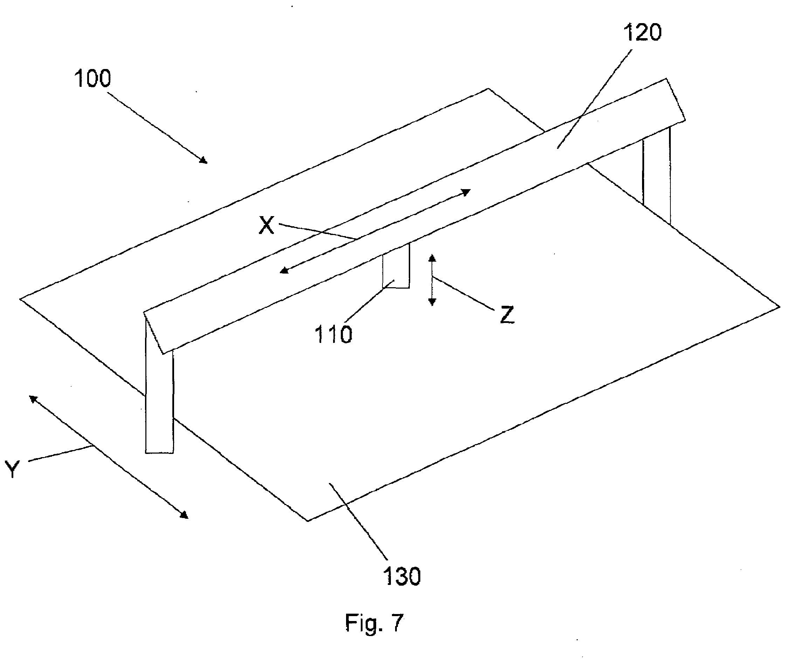

Fig. 7 zeigt eine perspektivische Ansicht der Wasserstrahlschneidanlage 100 in einer schematischen Darstellung. Erkennbar ist, dass an einer verfahrbaren Brücke 120 der Düsenkopf 110 angeordnet ist. Der Düsenkopf 110 ist entlang der Brücke 120 in X-Richtung beliebig verfahrbar. Die Brücke 120 ist gegenüber dem Tisch 130 in Y-Richtung beliebig verfahrbar, wie dies durch die jeweiligen Doppelpfeile angezeigt ist. Ferner ist der Düsenkopf 110 in Z-Richtung gegenüber der Brücke 120 verfahrbar, um somit den Abstand des Düsenkopfes zum Tisch 130 und damit zu dem auf dem Tisch 130 angeordneten Werkstück einzustellen, da der Abstand des Düsenkopfes zum Werkstück ein wichtiger Parameter ist, um die gewünschte Kontur der Durchtrittsöffnungen 2 in dem Siebbelag 1 herbeizuführen.

An der Brücke 120 können mehrere, beispielsweise bis zu 8 oder 10 Düsenköpfe 110 nebeneinander angeordnet sein, um hierdurch das Schneiden der Durchtrittsöffnungen 2 in dem Siebbelag 1 in jeweils einem zweistufigen Verfahren mittels zweier hintereinander an einem Düsenkopf 110 angeordneter Düsen 10, 20 gleichzeitig durchzuführen und hierdurch mit einer hohen Effektivität Siebbeläge mit exakter Formtreue der Durchtrittsöffnungen herzustellen.

### Bezugszeichenliste

- 1: Siebbelag
- 2: Durchtrittsöffnungen
- 3: Rohling des Siebbelages
- 4: Oberseite des Siebbelages
- 5: Unterseite des Siebbelages
- 6: Durchströmungsrichtung
- B: Breite der Durchtrittsöffnungen
- L: Länge der Durchtrittsöffnungen
- α: halber Öffnungswinkel der Durchtrittsöffnungen gegenüber der Senkrechten
- 10: erste Düse für den ersten Verfahrensschritt des Wasserstrahlschneidens (Vorschneiden der Durchtrittsöffnungen)
- A1: Abstand der ersten Düse 10 zum Werkstück beim Vorschneiden der Durchtrittsöffnungen
- 11: erste Abrasivzufuhranlage zur Versorgung der ersten Düse 10 mit einem Abrasiv
- 12: erste Hydraulikpumpe zur Bereitstellung von Hochdruckwasser an der ersten Düse 10
- 13: erste Hochdruckleitung zur ersten Düse 10
- 14: erste Abrasivzufuhrleitung zur ersten Düse 10
- 20: zweite Düse für den zweiten Schritt des Wasserstrahlschneidens (Fertigschneiden der Durchtrittsöffnungen)
- A2: Abstand der zweiten Düse 20 zum Werkstück beim Fertigschneiden der Durchtrittsöffnungen
- 21: zweite Abrasivzufuhranlage zur Versorgung der zweiten Düse 20 mit einem Abrasiv
- 22: zweite Hydraulikpumpe zur Bereitstellung von Hochdruckwasser an der zweiten Düse 20
- 23: zweite Hochdruckleitung zur zweiten Düse 20
- 24: zweite Abrasivzufuhrleitung zur zweiten Düse 20
- D: Dicke des Rohlings und des Siebbelages
- d: verbleibende Materialstärke nach dem Vorschneiden
- 100: Wasserstrahlschneidanlage
- 110: Düsenkopf
- 120: Brücke
- 130: Tisch
- X, Y, Z: Verfahrkoordinaten des Düsenkopfes 110 der Wasserstrahlschneidanlage 100

## Patentansprüche

1. Verfahren zur Herstellung eines Siebbelages (1), wobei in einen Rohling Durchtrittsöffnungen (2) mittels Wasserstrahlschneiden eingebracht werden, wobei das Wasserstrahlschneiden in mehreren Schritten erfolgt, wobei in einem ersten Schritt ein Vorschneiden der Durchtrittsöffnungen (2) des Siebbelages (1) erfolgt und in zumindest einem zweiten Schritt ein Fertigschneiden der Durchtrittsöffnungen (2) des Siebbelages (1) erfolgt, **dadurch gekennzeichnet, dass** in dem ersten Schritt des Vorschneidens ein Modellieren der Öffnungsweite und des Öffnungswinkels (α) der sich in Durchströmrichtung (6) erweiternden Durchtrittsöffnungen (2) erfolgt und wobei in dem zweiten Schritt des Fertigschneidens die Definition der Lochweite bzw. Schlitzbreite (B) der Durchtrittsöffnungen (2) erfolgt, wobei beim Vorschneiden mittels Wasserstrahlschneiden lediglich ein Materialabtrag erfolgt, wobei noch keine durch die Dicke des Materials von der Oberseite bis zur Unterseite des Siebbelages durchgehenden Öffnungen geschnitten werden.

2. Verfahren nach Anspruch 1, **dadurch gekennzeichnet, dass** das Vorschneiden und/oder das Fertigschneiden mittels Wasser-Abrasiv-Suspensionsstrahlschneiden oder mittels Wasser-Abrasiv-Injektorstrahlschneiden durchgeführt wird.

3. Verfahren nach Anspruch 1 oder 2, **dadurch gekennzeichnet, dass** das Vorschneiden und das Fertigschneiden mittels zweier auf einem Düsenkopf (110) insbesondere hintereinander angeordneter Düsen (10, 20) erfolgt.

4. Verfahren nach einem der vorherigen Ansprüche, **dadurch gekennzeichnet, dass** das Vorschneiden und das Fertigschneiden mittels zweier Düsen (10, 20) erfolgt, die mit dem selben Wasserdruck oder mit unterschiedlichen Wasserdrücken beaufschlagt sind.

5. Verfahren nach einem der vorherigen Ansprüche, **dadurch gekennzeichnet, dass** beim Vorschneiden ein Materialabtrag bis zu einer verbleibenden Materialstärke (d) erfolgt, wobei noch keine Durchtrittsöffnungen geschnitten werden.

6. Verfahren nach einem der vorherigen Ansprüche, **dadurch gekennzeichnet, dass** eine Materialstärke von bis zu 0,5 mm, insbesondere bis zu 0,8 mm, insbesondere bis zu 1,0 mm, insbesondere bis zu 1,2 mm, insbesondere bis zu 1,5 mm, insbesondere bis zu 2,0 mm nach dem Materialabtrag beim Vorschneiden verbleibt.

7. Verfahren nach einem der vorherigen Ansprüche, **dadurch gekennzeichnet, dass** das Fertigschneiden und das Vorschneiden mit dem selben Wasserdruck durchgeführt wird oder dass das Fertigschneiden mit einem höheren Wasserdruck durchgeführt wird als das Vorschneiden oder dass das Vorschneiden mit einem höheren Wasserdruck durchgeführt wird als das Fertigschneiden.

8. Verfahren nach einem der vorherigen Ansprüche, **dadurch gekennzeichnet, dass** das Vorschneiden mit einem Abrasivzusatz, insbesondere mit einer Suspension enthaltend einen Abrasivzusatz erfolgt.

9. Verfahren nach einem der vorherigen Ansprüche, **dadurch gekennzeichnet, dass** das Fertigschneiden mit einem Abrasivzusatz, insbesondere mit einer Suspension enthaltend einen Abrasivzusatz erfolgt.

10. Verfahren nach einem der vorherigen Ansprüche, **dadurch gekennzeichnet, dass** der Abstand (A1) zwischen Düse (10) und Werkstück beim Vorschneiden größer ist als der Abstand (A2) zwischen Düse (20) und Werkstück beim Fertigschneiden.

11. Verfahren nach einem der vorherigen Ansprüche, **dadurch gekennzeichnet, dass** bei beiden Fertigungsschritten mittels Wasserstrahlschneiden zum Vorschneiden und zum Fertigschneiden der Durchtrittsöffnungen derselbe Abrasivzusatz eingesetzt wird.

12. Verfahren nach einem der Ansprüche 1 bis 10, **dadurch gekennzeichnet, dass** bei beiden Fertigungsschritten mittels Wasserstrahlschneiden zum Vorschneiden und zum Fertigschneiden der Durchtrittsöffnungen unterschiedliche Abrasivzusätze eingesetzt werden.

## Claims

1. Method for producing a screen lining (1), wherein passage openings (2) are made in a blank by means of waterjet cutting, wherein the waterjet cutting takes place in several steps, wherein the passage openings (2) of the screen covering (1) are pre-cut in a first step and the passage openings (2) of the screen lining (1) are finish cut in at least one second step, **characterised in that** in the first step of the pre-cutting, the opening width and the opening angle (α) of the passage openings (2) widening in the flow direction (6) are modelled and wherein in the second step of the finish cutting, the hole width or slot width (B) of the passage openings (2) are defined, wherein only material removal takes place when pre-cutting by means of waterjet cutting, wherein no openings are cut through the thickness of the material from the top to the bottom of the screen lining.

2. Method according to claim 1, **characterised in that** the pre-cutting and/or the finish cutting is carried out by means of water-abrasive suspension jet cutting or by means of water-abrasive injector jet cutting.

3. Method according to claim 1 or 2, **characterised in that** the pre-cutting and the finish cutting are carried out by means of two nozzles (10, 20) arranged in particular one behind the other on a nozzle head (110).

4. Method according to any one of the preceding claims, **characterised in that** the pre-cutting and the finish cutting take place by means of two nozzles (10, 20) which are acted upon with the same water pressure or with different water pressures.

5. Method according to any one of the preceding claims, **characterised in that** during pre-cutting, material is removed up to a remaining material thickness (d), wherein no passage openings are yet cut.

6. Method according to any one of the preceding claims, **characterised in that** a material thickness of up to 0.5 mm, in particular up to 0.8 mm, in particular up to 1.0 mm, in particular up to 1.2 mm, in particular up to 1.5 mm, in particular up to 2.0 mm remains after the material removal during pre-cutting.

7. Method according to any one of the preceding claims, **characterised in that** the finish cutting and the pre-cutting is carried out with the same water pressure or **in that** the finish cutting is carried out with a higher water pressure than the pre-cutting or **in that** the pre-cutting is carried out with a higher water pressure than the finish cutting.

8. Method according to any one of the preceding claims, **characterised in that** the pre-cutting is carried out with an abrasive additive, in particular with a suspension containing an abrasive additive.

9. Method according to any one of the preceding claims, **characterised in that** the finish cutting is carried out with an abrasive additive, in particular with a suspension containing an abrasive additive.

10. Method according to any one of the preceding claims, **characterised in that** the distance (A1) between the nozzle (10) and the workpiece during pre-cutting is greater than the distance (A2) between the nozzle (20) and the workpiece during finish cutting.

11. Method according to any one of the preceding claims, **characterised in that** the same abrasive additive is used in both production steps by means of waterjet cutting for pre-cutting and for finish cutting the passage openings.

12. Method according to any one of the claims 1 to 10, **characterised in that** different abrasive additives are used in both production steps by means of waterjet cutting for pre-cutting and for finish cutting the passage openings.

## Revendications

1. Procédé de fabrication d'un panneau de criblage (1), dans lequel des ouvertures de passage (2) sont aménagées dans une ébauche au moyen d'une découpe au jet d'eau, dans lequel la découpe au jet d'eau est effectuée en plusieurs étapes, dans lequel dans une première étape, une prédécoupe des ouvertures de passage (2) du panneau de criblage (1) est effectuée et dans au moins une seconde étape, une découpe de finition des ouvertures de passage (2) du panneau de criblage (1) est effectuée, **caractérisé en ce que**
dans la première étape de la prédécoupe, une modélisation de la largeur d'ouverture et de l'angle d'ouverture (α) des ouvertures de passage (2) s'élargissant dans la direction d'écoulement (6) est effectuée et dans lequel dans la seconde étape de la découpe de finition, la définition de la largeur de trou ou de la largeur de fente (B) des ouvertures de passage (2) est effectuée, dans lequel lors de la prédécoupe au moyen d'une découpe au jet d'eau, seul un retrait de matériau est effectué, dans lequel aucune ouverture traversante à travers l'épaisseur du matériau du côté supérieur jusqu'au côté inférieur du panneau de criblage n'est encore effectuée.

2. Procédé selon la revendication 1, **caractérisé en ce que** la prédécoupe et/ou la découpe de finition est réalisée au moyen d'une découpe au jet d'eau à suspension abrasive ou au moyen d'une découpe au jet d'eau à injecteur abrasive.

3. Procédé selon la revendication 1 ou 2, **caractérisé en ce que** la prédécoupe et la découpe de finition sont effectuées au moyen de deux buses (10, 20) disposées sur une tête de buse (110) en particulier l'une derrière l'autre.

4. Procédé selon l'une quelconque des revendications précédentes, **caractérisé en ce que** la prédécoupe et la découpe de finition sont effectuées au moyen de deux buses (10, 20) qui sont alimentées avec la même pression d'eau ou avec des pressions d'eau différentes.

5. Procédé selon l'une quelconque des revendications précédentes, **caractérisé en ce que** lors de la prédécoupe, un retrait de matériau est effectué jusqu'à une épaisseur de matériau restante (d), dans lequel aucune ouverture de passage n'a encore été découpée.

6. Procédé selon l'une quelconque des revendications précédentes, **caractérisé en ce qu'**il reste une épaisseur de matériau allant jusqu'à 0,5 mm, en particulier jusqu'à 0,8 mm, en particulier jusqu'à 1,0 mm, en particulier jusqu'à 1,2 mm, en particulier jusqu'à 1,5 mm, en particulier jusqu'à 2 mm après le retrait de matériau lors de la prédécoupe.

7. Procédé selon l'une quelconque des revendications précédentes, **caractérisé en ce que** la découpe de finition et la prédécoupe sont réalisées avec la même pression d'eau ou **en ce que** la découpe de finition est réalisée avec une pression d'eau plus élevée que celle de la prédécoupe ou **en ce que** la prédécoupe est réalisée avec une pression d'eau plus élevée que celle de la découpe de finition.

8. Procédé selon l'une quelconque des revendications précédentes, **caractérisé en ce que** la prédécoupe est effectuée avec un complément abrasif, en particulier avec une suspension contenant un complément abrasif.

9. Procédé selon l'une quelconque des revendications précédentes, **caractérisé en ce que** la découpe de finition est effectuée avec un complément abrasif, en particulier avec une suspension contenant un complément abrasif.

10. Procédé selon l'une quelconque des revendications précédentes, **caractérisé en ce que** la distance (A1) entre la buse (10) et la pièce fabriquée lors de la prédécoupe est plus grande que la distance (A2) entre la buse (20) et la pièce fabriquée lors de la découpe de finition.

11. Procédé selon l'une quelconque des revendications précédentes, **caractérisé en ce que** lors des deux étapes de finition au moyen d'une découpe au jet d'eau pour la prédécoupe et pour la découpe de finition des ouvertures de passage, le même complément abrasif est utilisé.

12. Procédé selon l'une quelconque des revendications 1 à 10, **caractérisé en ce que** lors des deux étapes de finition au moyen d'une découpe au jet d'eau pour la prédécoupe et pour la découpe de finition des ouvertures de passage, des compléments abrasifs différents sont utilisés.
